# EUROPÄISCHE PATENTSCHRIFT

(11) **EP 1 812 975 B1**
(45) Veröffentlichungstag und Bekanntmachung des Hinweises auf die Patenterteilung: **02.07.2008**
(21) Anmeldenummer: 05732351.1
(22) Anmeldetag: 13.04.2005
(51) Int. Cl.: H01L 41/09

(54) **LINEARER ULTRASCHALLMOTOR**
LINEAR ULTRASONIC MOTOR
MOTEUR A ULTRASONS LINEAIRE

(30) Priorität: 15.11.2004 DE 102004055082
(43) Veröffentlichungstag der Anmeldung: 01.08.2007
(73) Patentinhaber: Physik Instrumente (PI) GmbH & Co. KG, 76228 Karlsruhe (DE)
(72) Erfinder: WISCHNEWSKIJ, Wladimir, 76337 Waldbronn (DE); WISCHNEWSKIJ, Alexej, 76744 Woerth (DE)
(74) Vertreter: Kruspig, Volkmar
(86) Internationale Anmeldenummer: PCT/EP2005/003897
(87) Internationale Veröffentlichungsnummer: WO 2006/050759

(56) Entgegenhaltungen:
- EP-A- 0 755 054
- EP-A- 1 267 425
- WO-A-01/03282

## Beschreibung

Die vorliegende Erfindung bezieht sich auf lineare piezoelektrische Ultraschallmotoren gemäß Oberbegriff des Patentanspruches 1. Derartige Motoren sind als Antrieb in diversen Geräten der Feinpositionierung gedacht, z. B. zum Verstellen von optischen Linsen in miniaturisierten Kameraobjektiven, in Mikroskopietischen, zur Positionierung von Schreib-/Leseköpfen in Geräten der Datenspeicherung sowie in anderen derartigen mechatronischen Geräten.

Aus der EP 0 450 919 A1 sind lineare piezoelektrische Ultraschallmotoren bekannt, die nach dem Prinzip der Anregung in einem ellipsenförmigen Resonator (einem geschlossenen Wellenleiter) einer laufenden Welle funktionieren. Der Ultraschalloszillator in Motoren dieser Konstruktion wird aus einem nicht piezoelektrischen Werkstoff gefertigt. Zur Anregung einer laufenden Biegewelle wird an den Resonator mittels einer Klebeverbindung ein elektromechanischer Energiewandler (piezoelektrisches Element) angebracht. Um eine laufende Welle im Resonator möglichst effektiv anregen zu können, ist es notwendig die akustische Verbindung zwischen dem Resonator und dem Piezoelement im Bezug auf den akustischen Widerstand möglich gut zu gestalten, d.h. der akustische Übergangswiderstand zwischen dem piezoelektrischen Element und dem Resonator muss gering sein. Dies erfordert beispielsweise die Verwendung von harten Klebstoffen. Eine großflächige Klebeverbindung zwischen der Piezokeramik und dem Resonatorwerkstoff ist aber nicht möglich. Aufgrund von unterschiedlichen thermischen Ausdehnungskoeffizienten beider Werkstoffe kann die Keramik ausbrechen, andererseits erweicht im funktionsbedingten Leistungsbetrieb piezoelektrischer Ultraschallmotoren die Klebstoffschicht unter dem Ultraschalleinfluss, was zu Erhöhung des akustischen Widerstandes und daraus resultierenden erhöhten Leistungsverlusten führt. Die im Kontakt mit dem Läufer stehende Seite des Resonators ist mit ausgefrästen Zähnen oder Rippen ausgestattet, die der Verstärkung der tangentialen Komponente der Biegewelle dienen. Derartige Ausfräsungen sind ebenfalls nicht kostengünstig herstellbar.

Die bekannten Motoren weisen demnach eine sehr komplizierte Bauweise des Ringoszillators auf und sind für eine Miniaturisierung sowie kostengünstige Massenfertigung nicht geeignet.

Weiterhin sind aus US-PS 5,672,930 lineare Ultraschallmotoren bekannt, die die Anregung einer laufenden Ultraschallwelle in einem Stab-Oszillator (in einem offenen Wellenleiter) nutzen. Nachteilig erweist sich bei diesen Motoren die Tatsache, dass es praktisch unmöglich ist in einem offenen Wellenleiter eine sauber laufende Ultraschallwelle anzuregen. Gleichzeitig mit der Anregung einer laufenden Welle wird in einem offenen Wellenleiter eine symmetrische stehende Welle angeregt, welche das effektive Funktionieren des Friktionskontaktes des Motors negativ beeinträchtigt. Dies führt zu einem starken Erwärmen des Friktionskontaktes bzw. des Ultraschallmotors selbst sowie zum Entstehen eines hohen Geräuschpegels. Außerdem erfordern diese Motoren eine hohe Anregungsspannung, sind ebenfalls teuer in der Fertigung und können nicht miniaturisiert werden.

Die nächstliegende Lösung stellen piezoelektrische Ultraschall-Linearmotoren nach der DE 199 45 042 C2 dar. Bei diesen Ultraschallmotoren werden im piezoelektrischen plattenförmigen Resonator gleichzeitig eine stehende Longitudinal- sowie Biegewelle angeregt. Im Ergebnis der Überlagerung der beiden Wellen erfährt das am Resonator angeordnete Stosselement eine elliptische Bewegung und überträgt dadurch die Bewegung an ein an das Stosselement angepresstes kugelgelagertes bewegliches Element. Nachteilig erweist sich in dieser Konstruktion der Einsatz einer relativ teueren Kugellagerung. Bei Verwendung einer Gleitlagerung entstehen Reibverluste in der Lagerung vergleichbar mit der von dem Aktor entwickelten bzw. durch den Friktionskontakt übertragende Nutzkraft. Die notwendige Verwendung von Kugellagern verkompliziert die Motoren, vergrößert ihren Bauraum und erhöht ihre Herstellungskosten. Außerdem ist es nicht möglich, bei Verwendung von Stahlkugellager solche Motoren für nichtmagnetische Anwendungen zu konzipieren.

EP 0 755 054 A2 offenbart einen linearen Ultraschallmotor mit einem Gegenlager, das ein separates, resonant erregtes piezoelektrisches Element aufweist.

Es ist daher Aufgabe der Erfindung, die Baugröße von linearen Ultraschallmotoren zu verkleinern sowie deren Wirkungsgrad zu erhöhen.

Die Lösung der Aufgabe der Erfindung erfolgt durch die Merkmalskombination nach Patentanspruch 1.

Ausgangspunkt der Erfindung ist ein linearer piezoelektrischer Ultraschallmotor mit einem linearen Gleit-Friktionskontakt zwischen dem angetriebenen Element und seiner Halterung, der die Anregung von Ultraschallschwingungen in der Halterung des angetriebenen Elementes ermöglicht, wobei die Reibung zischen dem angetriebenen Element sowie der Halterung verringert ist.

Bei einem linearen piezoelektrischen Ultraschallmotor mit Ultraschalloszillator in Form einer piezoelektrischen Platte oder eines Zylinderteils mit Generatoren akustischer Schwingungen sowie mit einem in Friktionswirkung mit dem angetriebenen Element stehenden Friktionselement, welches in einer Halterung angeordnet ist, wird die erwähnte Halterung in Form mindestens einer elastischen Klammer ausgeführt, die das angetriebene Element umfasst. Diese Klammer ist an dem Ultraschalloszillator befestigt und besteht aus einem schalleitenden Material.

Dadurch, dass die Halterung des angetriebenen Elementes an dem Ultraschalloszillator befestigt wird sowie aus einem schalleitenden Material besteht, werden in der Halterung seitens des Ultraschalloszillators generierte Ultraschallschwingungen intensiv mitangeregt sowie durchgeleitet. Das Vorhandensein von Ultraschallschwingungen in der Halterung ermöglicht eine Verringerung der Reibkraft zwischen dem angetriebenen Element und der Halterung und dadurch die ansonsten notwendige Verwendung von linearen Kugellagern. Dies vereinfacht die Konstruktion, verringert die Baugröße sowie die Herstellungskosten des Motors.

Die Klammer kann in verschiedenen Konstruktionsausführungen des Motors aus einem einen runden Querschnitt aufweisenden Metalldraht oder aus einem einen rechteckigen Querschnitt aufweisenden Metallband gefertigt werden. Dies ermöglicht eine bessere Anpassung des akustischen Widerstandes der Klammer an den Ultraschalloszillator sowie eine exakte Einstellung der Anpresskraft des angetriebenen Elementes an den Oszillator des Motors.

Außerdem kann in weiteren Motorvarianten das angetriebene Element in Form eines rechteckigen, dreieckigen, runden oder halbrunden Stabes mit einer flachen Oberfläche gefertigt werden.

Dies ermöglicht die Nutzung unterschiedlicher Herstellungstechnologien des angetriebenen Elementes und dadurch das Erreichen der notwendigen Herstellungspräzision für die jeweilige Anwendung.

In einer weiteren Ausführungsform des erfindungsgemäßen Ultraschallmotors kann das angetriebene Element als eine feststehende Führungsschiene ausgeführt werden, bezüglich derer der Ultraschalloszillator mit der an ihm angeordneten Halterung verschiebbar ist.

Dies erweitert den Einsatzbereich des erfindungsgemäßen Motors, da der Motor in Form eines Wagens konzipierbar ist, der entlang einer Führungsschiene beweglich ist.

Die Erfindung wird nachstehend anhand von Ausführungsbeispielen sowie unter Zuhilfenahme von Figuren näher erläutert.

Hierbei zeigen:
- Fig. 1: eine perspektivische Ansicht einer Ausführungsform des Ultraschallmotors
- Fig. 2, 3: Seitenansichten des Motors
- Fig. 4: eine erste Oszillatorvariante in Form einer piezoelektrischen Platte
- Fig. 5: eine zweite Oszillatorvariante in Form eines Teils einer Zylinderschale
- Fig. 6: Ausführungsvarianten der Oszillatorhalterung
- Fig. 7: Varianten des angetriebenen Elementes
- Fig. 8: ein Ultraschallmotor mit Halterungen aus dem Metallband
- Fig. 9: ein Motor mit Oszillator in Form eines Teils einer Zylinderschale
- Fig. 10: ein Motor mit zwei angetriebenen Elementen
- Fig. 11: ein Motor mit feststehenden angetriebenen Elementen
- Fig. 12: eine beispielhafte Anwendung des erfindungsgemäßen Motors und
- Fig. 13: die elektrische Beschaltung des erfindungsgemäßen Motors.

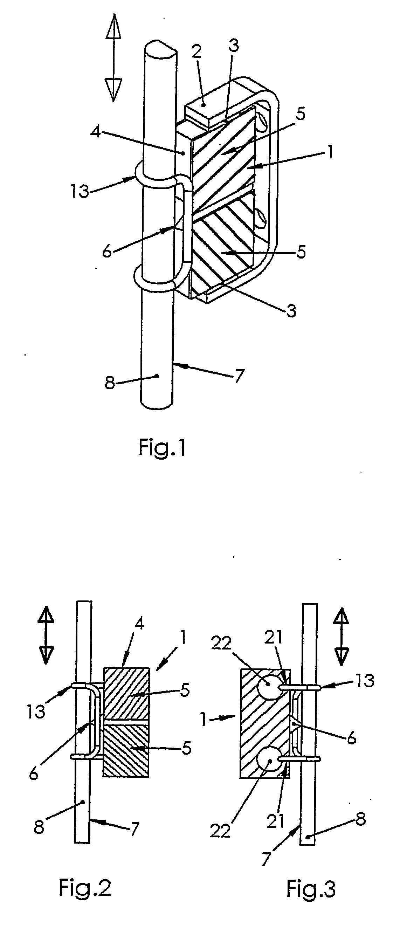

Der in Fig. 1, 2, 3 dargestellte erfindungsgemäße Ultraschallmotor besteht aus dem Ultraschalloszillator 1, der über schalleitenden Unterlagen 3 in einem Träger 2 angeordnet ist. Der Ultraschalloszillator 1 ist z. B. als eine piezoelektrische Platte 4 ausgeführt, die die Generatoren akustischer Schwingungen 5 beinhaltet. An oder auf der piezoelektrischen Platte 4 ist das Friktionselement 6 angeordnet, das mit der Friktionsfläche 7 des angetriebenen Elementes 8 in Friktionswirkung steht.

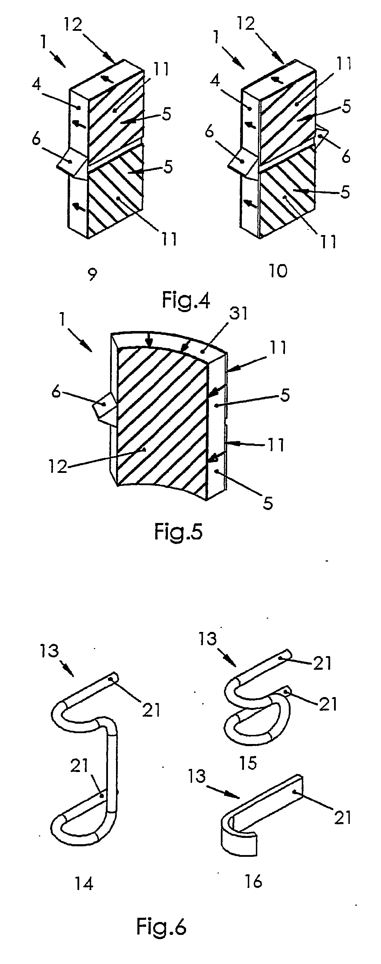

Gemäß verschiedenen Varianten des erfindungsgemäßen Motors können an der piezoelektrischen Platte 4 ein, zwei oder mehrere Friktionselemente 6 angeordnet werden, so wie dies aus Fig.4, Pos. 9 oder 10 ersichtlicht ist.

Der Oszillator 1 kann als ein Teil einer Zylinderschale 31 mit an ihr angeordneten Generatoren 5 sowie mit einem oder zwei Friktionselementen 6 ausgeführt werden, so wie dies in Fig. 5 dargestellt ist.

Die Generatoren akustischer Schwingungen 5 bestehen aus einer Anregungselektrode 11, einer gemeinsamen Elektrode 12 sowie der dazwischen liegenden piezoelektrischen Keramik der Platte 4.

Das angetriebene Element 8 wird in der speziellen Halterung 13 angeordnet, die in Form einer dieses Element umfassenden Klammer oder eines Bügels ausgeführt ist (siehe Fig. 6).

Die Klammer 13 wird aus einem schalleitenden Material hergestellt, z. B. aus einem Metalldraht, Metallband mit einem runden oder rechteckigen Querschnitt (Fig. 6, Pos. 14, 15, 16). Als Material der Halterung 13 kann beispielsweise temperaturbehandelter Stahl oder Bronze verwendet werden.

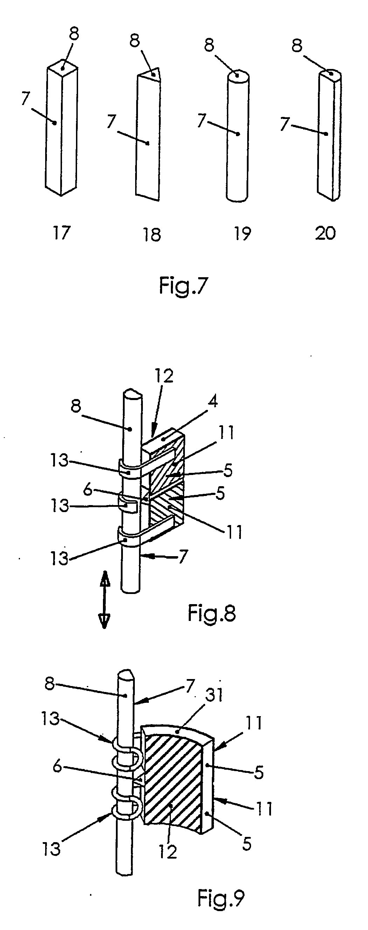

Das angetriebene Element 8 kann die Form eines Stabes mit dem rechteckigen, dreieckigen, runden, halbrunden Querschnitt aufweisen mit einer Planaroberfläche, so wie dies in Fig. 7, Pos. 17, 18, 19, 20 dargestellt ist. Als Material für das angetriebene Element kann entweder Metall oder Keramik eingesetzt werden z. B. temperaturbehandelter Karbonstahl, Aluminiumoxid, Zirkonoxid, Siliziumnitrid oder ähnlichen Materialien.

Die Halterung 13 wird fest an oder auf der Oberfläche der Oszillatorplatte 4 befestigt. Dazu werden die Enden 21 (Fig.6) der Halterung 13 an die Elektroden 11, 12 durch Löten (Fig. 3) oder Kleben (Fig. 8) mittels eines festen Epoxidklebstoffes stoffschlüssig befestigt.

In Fig. 9 ist ein erfindungsgemäßer Ultraschallmotor dargestellt mit einem Oszillator 1 in Form eines Teils einer Zylinderschale 31.

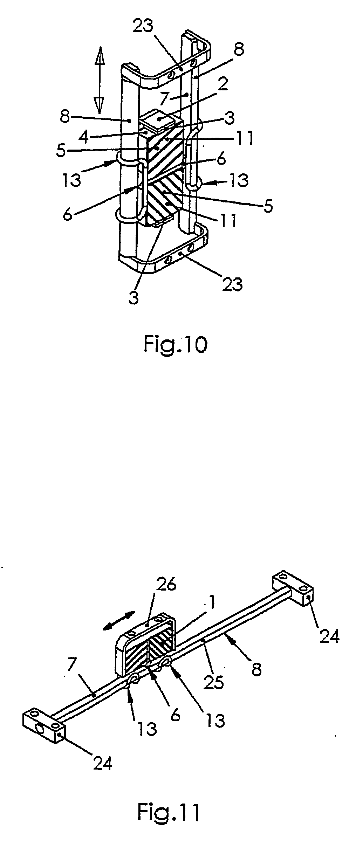

Fig. 10 zeigt eine Konstruktionsvariante des erfindungsgemäßen Motors mit zwei angetriebenen Elementen 8, die miteinander durch eine mechanische Brücke 23 verbunden sind.

In einer weiteren Variante des Motors (siehe Fig.11) kann das angetriebene Element 8 mit Hilfe der Halterungen 24 fest in Bezug auf das Gerätegehäuse (nicht dargestellt) angeordnet werden. In dieser Variante ist das angetriebene Element in Form einer Führungsschiene 25 ausgeführt. Der Oszillator 1 mit der Halterung 26, an der das zu bewegende Element befestigt wird (nicht dargestellt), sind in diesem Fall beweglich in Bezug auf die Führungsschiene angeordnet.

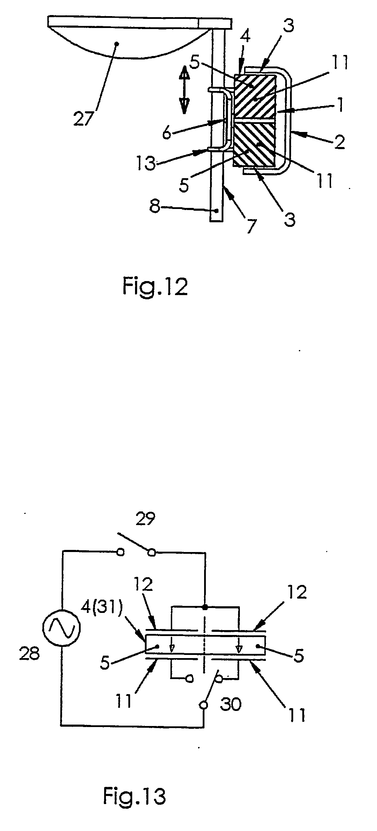

In einer weiteren Konstruktionsvariante des Motors ist an dem angetriebenen Element 8 eine optische Linse 27 angeordnet (siehe Fig.12), um eine Einrichtung zur Autofokussierung, z. B. für ein Photo-Mobilphone zu schaffen.

Fig. 13 zeigt einen elektrischen Beschaltungsplan des erfindungsgemäßen Motors mit der elektrischen Anregungsquelle 28. Die Schaltung enthält einen Schalter 29 zum Unterberechen der Versorgungsspannung sowie einen Schalter 30 zum Umschalten der Bewegungsrichtung des angetriebenen Elementes.

Der dargestellte erfindungsgemäße Ultraschallmotor hat folgende Funktionsweise.

Beim Betätigen des Schalters 29 (Fig. 13) werden die Elektroden 11, 12 des Generators akustischen Schwingungen 5 mit der elektrischen Wechselspannung der elektrischen Anregungsquelle 28 beaufschlagt. Die Frequenz der Wechselspannung entspricht dabei der Arbeitsfrequenz des Oszillators 1. Die Anregungsspannung regt den Generator 5 an, wodurch im Oszillator eine akustische stehende Welle entsteht. Das an der langen Stirnseite des Oszillators angeordnete und an die Friktionsfläche 7 angepresste Stosselement 6 fängt an zu schwingen, wodurch das angetriebene Element 8 in Bewegung versetzt wird. Die Bewegungsbahn des Stosselementes kann dabei eine Ellipse, ein Kreis oder eine gerade Linie sein, die zu der Stirnseite einen Winkel bildet. Die Form der Bewegungsbahn hängt von geometrischen Abmessungen des Oszillators ab, die ihrerseits die Art der angeregten stehenden Welle bestimmen.

Punkte, die an den Oberflächen der Elektroden 11, 12 liegen, schwingen mit den gleichen Amplituden, wie die darunterliegenden Punkte der Oszillatorplatte 4. Dadurch breiten sich hochfrequente Schwingungen auch in der an den Elektroden 11, 12 befestigten Halterung 13 (siehe Fig. 1 bis 3) aus. Da die Halterung 13 aus einem schalleitenden Werkstoff hergestellt ist, stellt sie für Ultraschall einen Wellenleiter dar. Aufgrund der speziell gebogenen Form der Halterung (siehe Fig.6) sind darin sowohl längs- als auch Biegeschwingungen vorhanden. Außerdem findet aufgrund des stufenartigen Übergangs zwischen dem Oszillator 1 und der Halterung 13 findet eine Verstärkung der Schwingamplitude der Halterung statt. Das Schwingen der Halterung 13 führt zur Verringerung von Reibverlusten zwischen ihr und dem angetriebenen Element.

Bei den Varianten des Motors mit zwei Friktionselementen, zwei angetriebenen Elementen 8 sowie zwei Halterungen (Fig. 10) (Fig.4 Pos.10) findet eine derartige Verringerung der Reibkraft in den beiden Halterungen statt.

Bei dem erfindungsgemäßen Motor können verschiedenen Ausführungsformen der angetriebenen Elemente eingesetzt werden. Einige Ausführungsbeispiele sind in Fig. 7 dargestellt.

Die Ausführung des Oszillators 1 in Form eines Teils der Zylinderschale (Fig. 5, Fig. 9 erleichtert die Anwendung des erfindungsgemäßen Motors in Geräten zylindrischer Form z. B. in Objektiven.

Die Ausführung des angetriebenen Elementes 8 in Form einer Führungsschiene 25 ermöglicht die Konstruktion des Motors als ein, in Fig. 10 dargestellter beweglicher Schlitten.

Die Verwendung des erfindungsgemäßen Motors in einem Objektiv (Fig. 10) oder in einem anderen derartigen optischen Gerät mit mehreren verstellbaren Linsen ermöglicht eine radiale Anordnung jedes einzelnen Motors längs der gemeinsamen Achse. Dies vereinfacht die gesamte Konstruktion und verringert die Baugröße des Gerätes.

Eine Herstellung der Halterung 13 beispielweise aus Berylliumbronze sowie des angetriebenen Elementes 8 aus Aluminiumoxid ermöglicht den Aufbau eines nichtmagnetischen linearen Motors.

Funktionstests des erfindungsgemäßen Motors wurden an mehreren Prototypen durchgeführt. So wurde ein Ultraschallmotor mit geometrischen Abmessungen des Oszillators 1 von 18x8x3mm³ sowie einer aus Berylliumbronze hergestellten Halterung 13 mit einem Durchmesser von 0,5 mm angefertigt. Als angetriebenes Element 8 wurde ein Stab aus gehärtetem Stahl eingesetzt mit einem Durchmesser von 3mm. Für die Anregung wurde eine speziell entwickelte Anregungsquelle 28 eingesetzt mit einer elektrischen Wechselspannung von 3,6V. Der vom Motor gezogene Strom betrug 0,15 mA. Während der Funktionstests zeigte der Motor eine Funktionsdauer von 660000 Bewegungszyklen bei einem Verfahrweg von 20mm. Die Funktionsdauer des Motors würde hochgerechnet eine Lebensdauer von ca. 18 Jahren bedeuten.

### Bezugzeichenliste

- 1: Ultraschalloszillator
- 2: Träger
- 3: schallisolierende Unterlagen
- 4: piezoelektrische Platte
- 5: Generator akustischer Schwingungen
- 6: Friktionselement
- 7: Friktionsoberfläche des angetriebenen Elementes
- 8: angetriebenes Element
- 9: eine die Konstruktion des Oszillators 1 erklärende Abbildung
- 10: eine die Konstruktion des Oszillators 1 erklärende Abbildung
- 11: Anregungselektrode
- 12: gemeinsame Elektrode
- 13: Halterung des angetriebenen Elementes 8
- 14: Konstruktionsvariante der Halterung 13
- 15: Konstruktionsvariante der Halterung 13
- 16: Konstruktionsvariante der Halterung 13
- 17: Konstruktionsvariante des angetriebenen Elementes 8
- 18: Konstruktionsvariante des angetriebenen Elementes 8
- 19: Konstruktionsvariante des angetriebenen Elementes 8
- 20: Konstruktionsvariante des angetriebenen Elementes 8
- 21: Enden der Halterung 13
- 22: Lötzinntropfen
- 23: elastische Brücke
- 24: Halterung der Führungsschiene 25
- 25: Führungsschiene
- 26: Halterung des zu bewegenden Elementes
- 27: optische Linse
- 28: Quelle der elektrischen Anregung
- 29: Schalter
- 30: Umschalter der Bewegungsrichtung
- 31: Teil der Zylinderschale

## Patentansprüche

1. Linearer piezoelektrischer Ultraschallmotor mit einem Ultraschalloszillator (1) in Form einer piezoelektrischen Platte (4) oder eines Teils einer Zylinderschale (31) eines Piezoelementes sowie Generatoren (5) zur Erzeugung akustischer Schwingungen und mit einem in Reibkontakt mit einem angetriebenen Element (8) stehenden Friktionselement (6),
**dadurch gekennzeichnet, dass**
das angetriebene Element (8) von einer Halterung (13) in Form mindestens einer elastischen Klammer oder eines Bügels umgriffen ist, wobei Enden (21) der Halterung (13), an dem Ultraschalloszillator stoffschlüssig befestigt sind und die Halterung (13) aus einem schalleitenden Material besteht.

2. Linearer Ultraschallmotor nach Anspruch 1
**dadurch gekennzeichnet, dass**
die Halterung (13) aus Metalldraht mit rundem oder einem Metallband mit rechteckigem Querschnitt besteht.

3. Linearer Ultraschallmotor nach Anspruch 1 oder 2
**dadurch gekennzeichnet, dass**
das angetriebene Element (8) die Form eines Stabes mit rechteckigem, dreieckigem, rundem oder halbrundem Querschnitt aufweist sowie eine ebene Friktionsfläche (7) besitzt.

4. Linearer Ultraschallmotor nach einem der vorangegangen Ansprüche
**dadurch gekennzeichnet, dass**
das angetriebene Element (8) ein feststehendes Führungselement (25) ist, bezüglich dessen der Ultraschalloszillator mit der an ihm angeordneten Halterung (13) bewegt wird.

## Claims

1. A linear piezoelectric ultrasonic motor, comprising an ultrasonic oscillator (1) in the form of a piezoelectric plate (4) or a cylinder shell part (31) of a piezoelectric element as well as generators (5) for generating acoustic oscillations and a friction element (6) frictionally interacting with a driven element (8),
**characterized in that**
the driven element (8) is embraced by a holder (13) in the form of at least one elastic clamp or bow, wherein ends (21) of the holder (13) are fixed to the ultrasonic oscillator in a material-closed manner and the holder (13) is made of a sound-conducting material.

2. The linear ultrasonic motor according to claim 1,
**characterized in that**
the holder (13) is made of a metal wire having a round cross-section or of a metal strip having a rectangular cross-section.

3. The linear ultrasonic motor according to claim 1 or 2,
**characterized in that**
the driven element (8) has the form of a rod with a rectangular, triangular, round or half-round cross-section and a plane friction surface (7).

4. The linear ultrasonic motor according to one of the preceding claims,
**characterized in that**
the driven element (8) is a stationary guiding element (25) with respect to which the ultrasonic oscillator with the holder (13) fixed to the same is moved.

## Revendications

1. Moteur piézo-électrique linéaire à ultrasons, comprenant un oscillateur à ultrasons (1) sous la forme d'une plaque piézo-électrique (4) ou d'une partie d'une coque cylindrique (31) d'un élément piézo-électrique, ainsi que des générateurs (5) pour engendrer des oscillations acoustiques, et comprenant un élément à friction disposé en contact de friction avec un élément entraîné (8),
**caractérisé en ce que**
l'élément entraîné (8) est enserré par une monture (13) sous la forme d'au moins une pince élastique ou d'un étrier, les extrémités (21) de la monture (13) étant fixées à l'oscillateur à ultrasons par coopération de matière, et la monture (13) étant en un matériau propageant les sons.

2. Moteur linéaire à ultrasons selon la revendication 1,
**caractérisé en ce que** la monture (13) est en fil métallique à section ronde ou en bande métallique à section rectangulaire.

3. Moteur linéaire à ultrasons selon la revendication 1 ou 2,
**caractérisé en ce que** l'élément entraîné (8) possède la forme d'un barreau à section rectangulaire, triangulaire, ronde ou demi-ronde, et une surface de friction plane.

4. Moteur linéaire à ultrasons selon l'une des revendications précédentes,
**caractérisé en ce que** l'élément entraîné (8) est un élément de guidage stationnaire (25), par rapport auquel l'oscillateur à ultrasons est déplacé avec la monture (18) agencée sur lui-même.
